# EUROPÄISCHE PATENTANMELDUNG

(11) **EP 4 592 168 A1**
(43) Veröffentlichungstag der Anmeldung: **30.07.2025**
(21) Anmeldenummer: 24186000.6
(22) Anmeldetag: 02.07.2024
(51) Int. Cl.: B62H 5/00, B62J 43/28, B62K 19/30, B62J 43/13

(54) **BATTERIEFACHSCHLOSS FÜR EIN FAHRZEUG**

(30) Priorität: 24.01.2024 DE 102024101999
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Die Erfindung betrifft ein Batteriefachschloss für ein Fahrzeug mit wenigstens einem Befestigungsmittel, durch welches das Batteriefachschloss an jeweils einem dafür vorgesehenen Befestigungselement des Fahrzeugs befestigbar ist, einem Riegel zur Verriegelung einer in einem Batteriefach des Fahrzeugs aufgenommenen Batterie, und einem mit dem Riegel gekoppelten oder koppelbaren, manuell betätigbaren Betätigungselement, durch welches der Riegel aus einer die Batterie verriegelnden Stellung in eine die Batterie freigebende Stellung bewegbar ist.

## Beschreibung

Die Erfindung betrifft ein Batteriefachschloss für ein Fahrzeug mit wenigstens einem Befestigungsmittel, durch welches das Batteriefachschloss an jeweils einem dafür vorgesehenen Befestigungselement des Fahrzeugs befestigbar ist, einem Riegel zur Verriegelung einer in einem Batteriefach des Fahrzeugs aufgenommenen Batterie, und einem mit dem Riegel gekoppelten oder koppelbaren, manuell betätigbaren Betätigungselement, durch welches der Riegel aus einer die Batterie verriegelnden Stellung in eine die Batterie freigebende Stellung bewegbar ist.

Ein derartiges Batteriefachschloss ist grundsätzlich bekannt und dient beispielsweise zur Sicherung von Batterien an elektrisch unterstützen Fahrrädern, sogenannten E-Bikes. Ein solches Batteriefachschloss ist üblicherweise als ein mechanisches Batteriefachschloss, welches mittels eines physischen Schlüssels entriegelbar ist, oder als ein elektronisches Batteriefachschloss ausgebildet, welches mittels eines virtuellen Schlüssels entriegelbar ist, welcher zum Beispiel auf einem Smartphone und/oder in einer Steuerung des E-Bikes hinterlegt ist. Ein mechanisches Batteriefachschloss umfasst dementsprechend einen Schließzylinder, in den der physische Schlüssel einführbar ist und dessen Verdrehung eine Freigabe des Riegels bewirkt, während das elektronische Batteriefachschloss eine Kommunikationseinheit zur insbesondere drahtlosen Kommunikation mit dem Smartphone, einen Elektromotor zur Freigabe des Riegels und eine mit der Kommunikationseinheit verbundene Steuereinheit zur Steuerung des Elektromotors umfasst. Aufgrund dieser konstruktiven Unterschiede weisen mechanische und elektronische Batteriefachschlösser gemeinhin unterschiedliche Baugrößen und/oder Gehäuseformen auf. Da das Batteriefachschloss zur wirksamen Sicherung der Batterie am Fahrrad mit einem Rahmen des Fahrrads fest zu verbinden ist, muss der Rahmen des Fahrrads zu dem Batteriefachschloss passende Befestigungselemente aufweisen. Herkömmlicherweise muss sich ein Fahrradhersteller also bereits bei der Konstruktion bzw. Auswahl des Rahmens entscheiden, ob das Fahrrad mit einem mechanischen oder elektronischen Batteriefachschloss ausgerüstet werden soll. Eine nachträgliche Umrüstung ist dann nicht mehr möglich oder zumindest mit großem Aufwand verbunden.

Der Erfindung liegt die Aufgabe zugrunde ein Batteriefachschloss zu schaffen, das einem Fahrradhersteller eine größere Flexibilität bei der Ausstattung seiner Fahrräder und somit eine wirtschaftlichere Fahrradherstellung erlaubt.

Gelöst wird die Aufgabe durch ein Batteriefachschloss mit den Merkmalen des Anspruchs 1.

Der Erfindung liegt der allgemeine Gedanke zugrunde, das Batteriefachschloss wahlweise als ein elektronisches Batteriefachschloss mit einer elektronisch lösbaren Sperrung des Riegels in der Verriegelungsstellung oder als ein mechanisches Batteriefachschloss mit einem durch einen physischen Schlüssel zu betätigenden Schließzylinder konfigurierbar zu gestalten, wobei das Betätigungselement und das wenigstens eine Befestigungsmittel in der elektronischen und mechanischen Konfiguration des Batteriefachschlosses jeweils gleich relativ zueinander angeordnet sind.

Dadurch, dass das Betätigungselement und das wenigstens eine Befestigungsmittel sowohl in der elektronischen als auch in der mechanischen Konfiguration des Batteriefachschlosses relativ zueinander gleich angeordnet sind, zeichnet sich das erfindungsgemäße Batteriefachschloss durch eine universelle Schnittstelle zu einem Rahmen des Fahrzeugs, z.B. eines Fahrrads aus, unabhängig davon, ob es als mechanisches oder elektronisches Batteriefachschloss ausgebildet ist. Der Fahrzeughersteller muss für das mechanische und elektronische Batteriefachschloss also keine unterschiedlichen Rahmen vorhalten, sondern kann an ein und demselben Rahmen wahlweise ein mechanisches oder ein elektronisches Batteriefachschloss befestigen. Hierdurch wird die Fahrzeugherstellung nicht nur vereinfacht und insgesamt kostengünstiger, sondern es eröffnet sich auch die Möglichkeit ein bereits fertigmontiertes Fahrzeug noch von einem mechanischen auf ein elektronisches Batteriefachschloss oder umgekehrt umzurüsten.

Es versteht sich, dass das Fahrzeug in diesem Kontext nicht auf ein elektrisch unterstütztes Fahrrad beschränkt ist, sondern dass es sich hierbei auch um einen Elektroroller, einen E-Scooter oder um einen elektrisch angetriebenen Rollstuhl handeln kann.

Weiterbildungen der Erfindung sind den Unteransprüchen, der Beschreibung und der Zeichnung zu entnehmen.

Gemäß einer Ausführungsform ist das Betätigungselement im in das Fahrzeug eingebauten Zustand des Batteriefachschlosses durch eine in einem Rahmen des Fahrzeugs ausgebildete Öffnung zugänglich. Gemäß einer alternativen Ausführungsform kann das Betätigungselement im in das Fahrzeug eingebauten Zustand des Batteriefachschlosses durch eine Öffnung zugänglich sein, die in einer Batteriefachabdeckung oder in einem Deckel für das Batteriefach ausgebildet ist.

Konkret kann das Betätigungselement bei mechanischer Konfiguration des Batteriefachschlosses durch einen Schließzylinder gebildet sein. Bei elektronischer Konfiguration des Batteriefachschlosses kann das Betätigungselement hingegen durch einen manuell betätigbaren Druckknopf gebildet sein.

Gemäß einer weiteren Ausführungsform sind der Riegel und das Betätigungselement bei verriegelter Batterie in der elektronischen und mechanischen Konfiguration des Batteriefachschlosses relativ zueinander gleich angeordnet. Hierdurch weist das Batteriefachschloss auch eine universelle Schnittstelle zu der zu sichernden Batterie auf, da der Riegel im montierten Zustand des Batteriefachschlosses unabhängig davon, ob das Batteriefachschloss als mechanisches oder elektronisches Batteriefachschloss konfiguriert ist, immer die gleiche verriegelnde und freigebende Stellung einnimmt.

Alternativ ist es aber auch denkbar, dass der Riegel und das Betätigungselement bei verriegelter Batterie in der elektronischen und mechanischen Konfiguration des Batteriefachschlosses relativ zueinander unterschiedlich angeordnet sind.

Gemäß einer weiteren Ausführungsform definiert das Betätigungselement eine Mittelachse und die Bewegungsrichtung des Riegels ist zu der Mittelachse des Betätigungselements rechtwinklig orientiert. Dabei kann der Abstand eines der Batterie zugewandten Endes des Riegels zu der Mittelachse des Betätigungselements bei verriegelter Batterie eine Relativanordnung von Riegel und Betätigungselement definieren.

Insbesondere kann der Riegel in einer zu der Mittelachse des Betätigungselements rechtwinklig orientierten Ebene bewegbar, zum Beispiel verschiebbar oder verschwenkbar, sein.

Ist der Riegel verschwenkbar ausgebildet, kann er beispielsweise um eine zu der Mittelachse des Betätigungselements parallele Achse oder um die Mittelachse des Betätigungselements selbst verschwenkbar sein.

Weiterer Gegenstand der Erfindung ist ein Fahrzeug mit einem Batteriefach zur Aufnahme einer Batterie und mit einem Batteriefachschloss der voranstehend beschrieben Art zur Verriegelung der in dem Batteriefachschloss aufgenommenen Batterie.

Dabei kann das Batteriefach in einem Rahmen des Fahrzeugs ausgebildet sein. Ferner kann die Mittelachse des Betätigungselements im verbauten Zustand des Batteriefachschlosses quer und insbesondere rechtwinklig zu einer Längserstreckung des Rahmens orientiert sein.

Gemäß einer weiteren Ausführungsform sieht das Batteriefach zwei relativ zu dem Batteriefachschloss unterschiedliche Aufnahmepositionen der Batterie in dem Batteriefach vor. Dies ermöglicht zum einen die Platzierung unterschiedlicher Batterien in dem Batteriefach, insbesondere von Batterien unterschiedlicher Baugröße. Zum anderen lassen sich dadurch Unterschiede in der Lage des Riegels ausgleichen, die aus der Konfiguration des Batteriefachschlosses resultieren, insbesondere wenn der Riegel und das Betätigungselement bei verriegelter Batterie in der elektronischen und mechanischen Konfiguration des Batteriefachschlosses relativ zueinander unterschiedlich angeordnet sind.

Beispielsweise können die Aufnahmepositionen durch einen entlang einer Schiene auf das Batteriefachschloss zu bzw. von dem Batteriefachschloss weg bewegbaren Schlitten zur Halterung der Batterie in dem Batteriefach definiert sein. Durch den Schlitten lassen sich auch unterschiedlich große Batterien jeweils in eine Lage relativ zu dem Batteriefachschloss bringen, in welcher die Batterie durch den Riegel des Batteriefachschlosses zuverlässig verriegelbar ist.

Nachfolgend wird die Erfindung rein beispielhaft anhand möglicher Ausführungsformen unter Bezug auf die beigefügte Zeichnung beschrieben.
- Fig. 1: ist eine schematische Darstellung eines Fahrrads mit einem elektrischen Antriebsmotor.
- Fig. 2A: ist eine perspektivische Ansicht eines mechanischen Batteriefachschlosses zur Verriegelung einer für die Stromversorgung des Antriebsmotors vorgesehenen Batterie.
- Fig. 2B: ist eine Seitenansicht des Batteriefachschlosses von Fig. 2A.
- Fig. 3A: ist eine perspektivische Ansicht eines elektronischen Batteriefachschlosses zur Verriegelung einer für die Stromversorgung des Antriebsmotors vorgesehenen Batterie.
- Fig. 3B: ist eine Seitenansicht des Batteriefachschlosses von Fig. 3A.
- Fig. 4A: ist eine perspektivische Ansicht von oben einer Variante eines mechanischen Batteriefachschlosses.
- Fig. 4B: ist eine perspektivische Ansicht von unten des Batteriefachschlosses von Fig. 4A.
- Fig. 5A: ist eine perspektivische Ansicht von oben einer Variante eines elektronischen Batteriefachschlosses.
- Fig. 5B: ist eine perspektivische Ansicht von unten des Batteriefachschlosses von Fig. 5A.
- Fig. 6: ist eine schematische Darstellung eines Batteriefachs zur Aufnahme einer für die Stromversorgung des Antriebsmotors vorgesehenen Batterie.

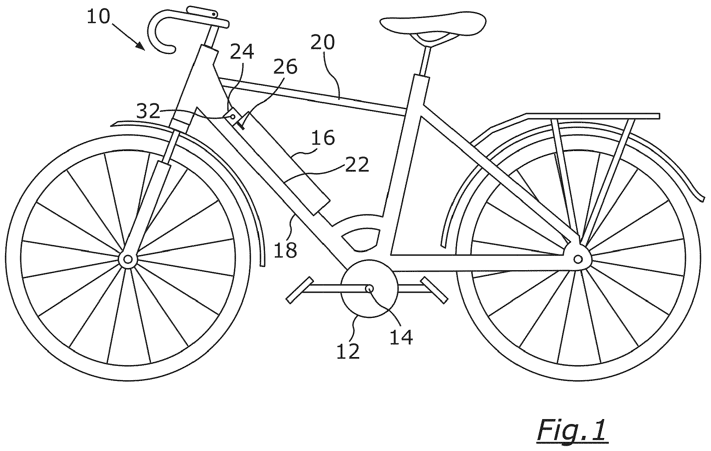

Fig. 1 zeigt ein elektrisch unterstütztes Fahrrad (E-Bike) 10 mit einem elektrischen Antriebsmotor 12, der im vorliegenden Ausführungsbeispiel im Bereich eines Tretlagers 14 angeordnet ist. Zur Versorgung des Antriebsmotors 12 mit elektrischer Energie ist eine wiederaufladbare Batterie 16 vorgesehen, die im vorliegenden Ausführungsbeispiel an einem Unterrohr 18 eines Rahmens 20 des Fahrrads 10 angeordnet ist. Konkret bildet der Rahmen 20 zur Aufnahme der Batterie 16 ein Batteriefach 22 aus, aus welchem die Batterie 16 beispielsweise zu Wartungszwecken und/oder zum Wiederaufladen entnommen werden kann. Das Batteriefach 22 definiert durch seine Erstreckung entlang des Unterrohrs 18 eine Längsrichtung.

Um eine unbefugte Entnahme der Batterie 16 aus dem Batteriefach 22 zu verhindern, ist im Bereich eines Endes des Batteriefachs 22, im vorliegenden Ausführungsbeispiel im Bereich eines oberen Endes, ein Batteriefachschloss 24 zur Verriegelung der Batterie 16 in dem Batteriefach 22 vorgesehen. Genauer gesagt ist das Batteriefachschloss 24 im Inneren des Unterrohrs 18 angeordnet.

Das Batteriefachschloss 24 umfasst einen bewegbar gelagerten Riegel 26, der zur Sicherung der in dem Batteriefach 22 aufgenommenen Batterie 16 mit der Batterie 16 in Eingriff bringbar und zur Freigabe der Batterie 16 mit dieser außer Eingriff bringbar ist. Der hier beschriebene Riegel 26 erstreckt sich in der Längsrichtung und ist in der Längsrichtung bewegbar gelagert. Grundsätzlich kann der Riegel 26 aber auch anders ausgebildet sein und/oder sich auf andere Weise bewegen. Beispielsweise ist ein rotierender Schwenkriegel vorstellbar.

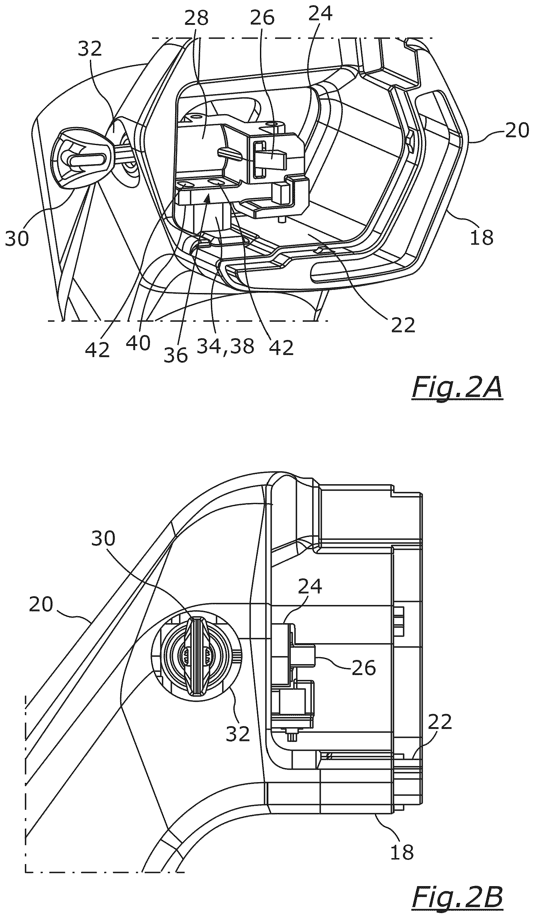

Zur Verlagerung des Riegels 26 in Richtung der Batterie 16 bzw. von der Batterie 16 weg umfasst das Batteriefachschloss 24 ein Betätigungselement, welches bei dem in Fig. 2A und 2B gezeigten Ausführungsbeispiel durch einen Schließzylinder 28 gebildet ist, der mittels eines physischen Schlüssels 30 betätigbar ist. Bei dem in Fig. 2A und 2B dargestellten Batteriefachschloss 24 handelt es sich somit um ein mechanisches Batteriefachschloss.

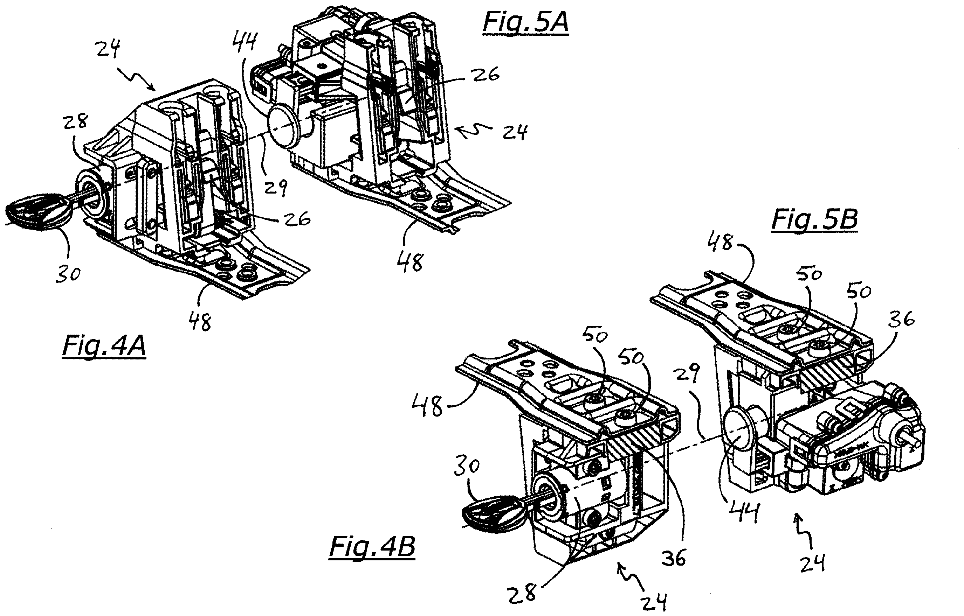

Der Schließzylinder 28 definiert eine Mittelachse 29 (Fig. 4 und 5), die sich im vorliegenden Ausführungsbeispiel rechtwinklig zu der Längsrichtung erstreckt. Der Schließzylinder 28 ist mit anderen Worten rechtwinklig zum Riegel 26 angeordnet. Damit sich der Schlüssel 30 von außen in den Schließzylinder 28 einführen lässt, ist der Schließzylinder 28 mit einer im Rahmen 20 ausgebildeten Durchgangsöffnung 32 ausgerichtet.

Zur Befestigung des Batteriefachschlosses 24 in dem Rahmen 20 weist der Rahmen 20 wenigstens ein Befestigungselement 34 und das Batteriefachschloss 24 wenigstens ein korrespondierendes Befestigungsmittel 36 auf. Im vorliegenden Ausführungsbeispiel ist das Befestigungselement 34 des Rahmens 20 in Gestalt eines Montagesockels 38 ausgebildet, in welchem zwei nicht gezeigte Gewindebohrungen vorgesehen sind. Das Batteriefachschloss 24 weist dagegen eine Montageplatte 40 auf, in welcher zwei mit den Gewindebohrungen des Montagesockels 38 ausgerichtete Bohrungen 42 ausgebildet sind, durch welche zur Fixierung des Batteriefachschlosses 24 an dem Rahmen 20 nicht gezeigte Schrauben in die Gewindebohrungen des Montagesockels 38 eingeschraubt werden können.

Der Schließzylinder 28 und das Befestigungsmittel 36 sind derart relativ zueinander angeordnet, dass der Schließzylinder 28 mit der Durchgangsöffnung 32 des Rahmens 20 ausgerichtet und somit von außen zugänglich ist, wenn das Batteriefachschloss 24 mittels seines Befestigungsmittels 36 an dem Rahmen 20, genauer gesagt an dem Montagesockel 38 montiert ist.

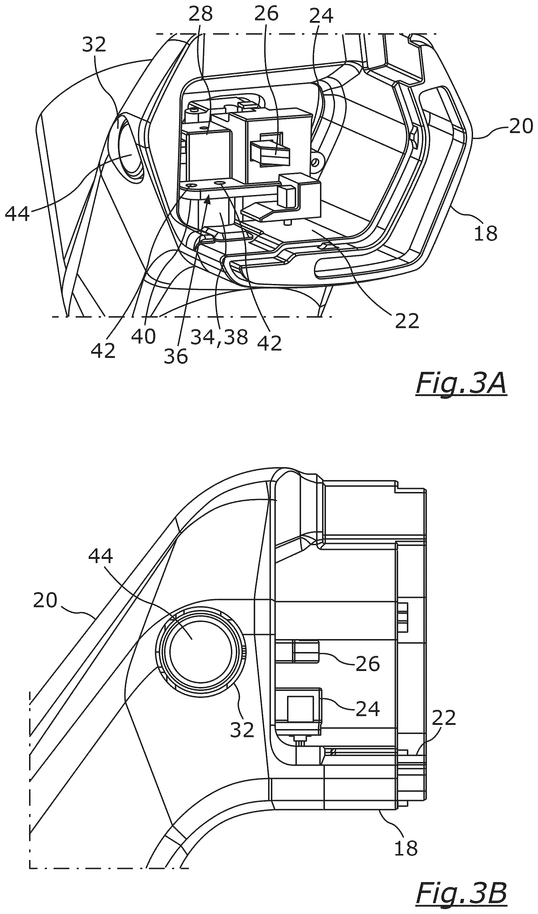

In Fig. 3A und 3B ist ein Batteriefachschloss 24 dargestellt, welches sich von dem voranstehend beschriebenen Batteriefachschloss 24 darin unterscheidet, dass das Betätigungselement zur Verlagerung des Riegels 26 aus seiner die in dem Batteriefach 22 aufgenommene Batterie 16 verriegelnden Stellung in die die Batterie 16 freigebende Stellung durch einen Druckknopf 44 gebildet ist. Auch der Druckknopf 44 weist, ähnlich wie der Schließzylinder 28, eine rechtwinklig zur Längsrichtung ausgerichtete Mittelachse 29 auf (Fig. 4 und 5). Des Weiteren ist auch der Druccknopf 44 mit der Durchgangsöffnung 32 des Rahmens 20 ausgerichtet. Der Druckknopf 44 lässt sich auf diese Weise entlang seiner Mittelachse 29 von außen in den Rahmen 20 hineindrücken, um den Riegel 26 über ein geeignetes Getriebe entgegen der Federkraft einer nicht gezeigten Rückstellfeder zurückzuziehen, d.h. in seine die Batterie 16 freigebende Stellung zu verlagern.

Die Freigabe der Batterie 16 ist dabei jedoch nur dann möglich, wenn der Riegel 26 zuvor durch einen berechtigten Benutzer des Batteriefachschlosses 24 elektronisch entsperrt wurde, beispielsweise durch eine elektromotorische Entkopplung eines nicht gezeigten Sperrglieds von dem Riegel 26. Eine Authentifizierung des Benutzers gegenüber dem Batteriefachschloss 24 kann dabei in an sich bekannter Weise erfolgen, z.B. durch Überprüfen eines Fingerabdrucks oder durch einen drahtlosen oder kabelgebundenen Austausch eines virtuellen Schlüssels, z.B. mittels eines Smartphones oder eines anderen elektronischen Endgeräts. Bei dem in Fig. 3A und 3B dargestellten Batteriefachschloss 24 handelt es sich mit anderen Worten also um ein elektronisches Batteriefachschloss.

Zur Befestigung am Montagesockel 38 des Rahmens 20 weist auch das elektronische Batteriefachschloss 24 ein Befestigungsmittel 36 in Gestalt einer Montageplatte 40 mit zwei darin ausgebildeten Bohrungen 42 auf, welche derart relativ zu dem Druckknopf 44 positioniert sind, dass der Druckknopf 44 von außen zugänglich mit der Durchgangsöffnung 32 des Rahmens 20 ausgerichtet ist, wenn das elektronische Batteriefachschloss 24 im Rahmen 20 verbaut ist.

Die Relativlage des Befestigungsmittels 36 zu dem Druckknopf 44 ist bei dem in Fig. 3A und 3B gezeigten elektronischen Batteriefachschloss 24 gleich der Relativlage des Befestigungsmittels 36 zu dem Schließzylinder 28 des mechanischen Batteriefachschlosses 24 von Fig. 2A und 2B. Bei gleichbleibender Positionierung des Befestigungselements 34 relativ zu der Durchgangsöffnung 32 des Rahmens 20 kann somit wahlweise ein mechanisches oder elektronisches Batteriefachschloss 24 in dem Rahmen 20 verbaut werden. Entsprechend braucht bei der Herstellung des Rahmens 20 nicht zu berücksichtigt zu werden, ob zukünftig ein mechanisches oder ein elektronisches Batteriefachschloss 24 verbaut werden soll, da eine einzige definierte Positionierung des Befestigungselements 34 relativ zur Durchgangsöffnung 32 beides ermöglicht.

In Fig. 4A und 4B ist eine Variante eines mechanischen Batteriefachschlosses 24 dargestellt, welche sich von dem in Fig. 2A und 2B gezeigten mechanischen Batteriefachschloss 24 zum einen darin unterscheidet, dass der Riegel 26 hier nicht in der Längsrichtung verschiebbar, sondern um eine Achse verschwenkbar ist, welche parallel zu der Mittelachse 29 des Schließzylinders 28 verläuft. Auch dieser verschwenkbare Riegel 26 erstreckt sich somit in einer zu der Mittelachse 29 des Schließzylinders 28 rechtwinkligen Ebene und ist in dieser bewegbar, d.h. also rechtwinklig zu der Mittelachse 29 des Schließzylinders 28.

Zum anderen unterscheidet sich das in Fig. 4A und 4B dargestellte Batteriefachschloss 24 von dem in Fig. 2A und 2B gezeigten Batteriefachschloss 24 in der Montage am Rahmen 20. So erfolgt die Befestigung des in Fig. 4A und 4B dargestellten Batteriefachschlosses 24 an einem Befestigungselement 34 in Gestalt eines länglichen Trägerelements 48, welches seinerseits an dem Rahmen 20 fixierbar ist. Konkret weist das Batteriefachschloss 24 an seiner Unterseite ein Befestigungsmittel 36 auf, durch welches das Batteriefachschloss 24 mittels zumindest einer Schraube 50 an dem Trägerelement 48 befestigbar ist, die durch wenigstens ein in dem Trägerelement 48 entsprechend ausgebildetes Loch hindurch geführt werden kann. Im gezeigten Ausführungsbeispiel sind zwei Schrauben 50 vorgesehen. Das Befestigungsmittel 36 an der Unterseite des Batteriefachschlosses 24 und/oder das wenigstens eine Loch des Trägerelements 48 können bzw. kann so ausgebildet sein, dass das zu montierende Batteriefachschloss 24 zum Ausgleichen von Toleranzen in der Längsrichtung verschiebbar ist, wodurch die Ausrichtung des Batteriefachschlosses 24 mit dem Rahmen 20 und insbesondere die Ausrichtung des Schließzylinders 28 mit der in dem Rahmen 20 ausgebildeten Durchgangsöffnung 32 vereinfacht wird. Beispielsweise kann das wenigstens eine Loch des Trägerelements 48 als ein Langloch ausgebildet sein (in Fig. 4A und 5B nicht gezeigt).

In Fig. 5A und 5B ist eine Variante eines elektronischen Batteriefachschlosses 24 dargestellt, welche sich von dem in Fig. 4A und 4B gezeigten mechanischen Batteriefachschloss 24 zum einen darin unterscheidet, dass das Betätigungselement zur Verlagerung des Riegels 26 ähnlich wie bei dem Batteriefachschloss von Fig. 3A und 3B durch einen Druckknopf 44 gebildet ist. Auch der Druckknopf 44 des Batteriefachschlosses 24 von Fig. 5A und 5B weist eine rechtwinklig zur Längsrichtung ausgerichtete Mittelachse 29 auf und ist mit der Durchgangsöffnung 32 des Rahmens 20 ausgerichtet.

Zum anderen unterscheidet sich das Batteriefachschloss 24 von Fig. 5A und 5B von dem in Fig. 4A und 4B gezeigten Batteriefachschloss 24 darin, dass der Riegel 26 sich hier in einer zu der Längsrichtung zumindest annähernd parallelen Richtung erstreckt und entlang dieser Richtung bewegbar gelagert ist. Im vorliegenden Ausführungsbeispiel weicht die Erstreckungs- bzw. Bewegungsrichtung des Riegels 26 um wenige Grad, z.B. 5 Grad, von der Längsrichtung ab, und zwar auf das Trägerelement 48 zu. Grundsätzlich kann die Erstreckungs- bzw. Bewegungsrichtung des Riegels 26 aber auch exakt parallel zu der Längsrichtung orientiert sein. In jedem Fall erstreckt sich auch der Riegel 26 des Batteriefachschlosses 24 von Fig. 5A und 5B rechtwinklig zu der Mittelachse 29 des Druckknopfes 44 und ist rechtwinklig zu dieser verschiebbar.

Die Montage des elektronischen Batteriefachschlosses 24 von Fig. 5A und 5B erfolgt in der gleichen Weise wie die des mechanischen Batteriefachschlosses 24 von Fig. 4A und 4B, d.h. mittels wenigstens einer Schraube 50 an dem Trägerelement 48.

Da der Schließzylinder 28 und der Druckknopf 44 jeweils relativ gleich zu dem Befestigungsmittel 36 angeordnet sind und im montierten Zustand des jeweiligen Batteriefachschlosses 24 somit die gleiche Relativlage zu dem wenigstens einen Loch des Trägerelements 48 zur Durchführung der mindestens einen Schraube 50 einnehmen, lassen sich - ähnlich wie die Batteriefachschlösser 24 von Fig. 2 und 3 - auch die Batteriefachschlösser 24 von Fig. 4 und 5 leicht gegeneinander austauschen.

Außerdem weisen bei den voranstehend beschriebenen Batteriefachschlössern 24 die jeweils mit der Batterie 16 in Eingriff gelangenden freien Enden der Riegel 26 in der die Batterie 16 verriegelnden Stellung im Wesentlichen gleiche Abstände in Längsrichtung gesehen zu der Mittelachse 29 des Schließzylinders 28 bzw. des Druckknopfes 44 auf. Entsprechendes gilt für die Abstände in Längsrichtung gesehen der freien Enden der Riegel 26 relativ zu der Mittelachse 29 des Schließzylinders 28 bzw. des Druckknopfes 44 in der die Batterie 16 freigebenden Stellung. Dies trägt dazu bei, dass ein elektronisches Batteriefachschloss 24 beispielsweise auf Kundenwunsch problemlos gegen ein mechanisches Batteriefachschloss 24 ausgetauscht werden kann.

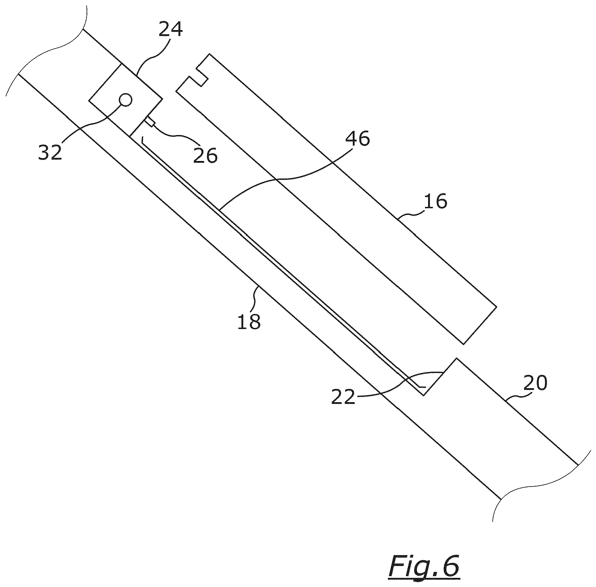

Es sind jedoch Ausführungsformen von mechanischen oder elektronischen Batteriefachschlössern 24 vorstellbar, die sich zwar mit einem mit der Durchgangsöffnung 32 des Rahmens 20 ausgerichtetem Betätigungselement an dem Befestigungselement 34 des Rahmens 20 montieren lassen, deren Riegel 26 aber eine andere Länge aufweisen und/oder zur Verriegelung bzw. Freigabe der Batterie 16 eine größere oder kleinere Bewegung als die voranstehend beschriebenen Riegel 26 ausführen. Um derartigen Ausführungsformen Rechnung zu tragen, kann ein entlang einer nicht gezeigten Schiene in Längsrichtung verstellbarer Schlitten 46 in dem Batteriefach 22 angeordnet sein (Fig. 6), auf welchem die in dem Batteriefach 22 aufgenommene Batterie 16 platziert wird und durch welchen die Lage der Batterie 16 innerhalb des Batteriefachs 22 an das jeweils verbaute Batteriefachschloss 24 angepasst werden kann. Es ist sogar vorstellbar, dass der Schlitten 46 die Aufnahme und Verriegelung unterschiedlicher Typen von Batterien 16 in dem Batteriefach 22 ermöglicht.

### Bezugszeichenliste

- 10: Fahrrad
- 12: Antriebsmotor
- 14: Tretlager
- 16: Batterie
- 18: Unterrohr
- 20: Rahmen
- 22: Batteriefach
- 24: Batteriefachschloss
- 26: Riegel
- 28: Schließzylinder
- 29: Mittelachse
- 30: Schlüssel
- 32: Durchgangsöffnung
- 34: Befestigungselement
- 36: Befestigungsmittel
- 38: Montagesockel
- 40: Montageplatte
- 42: Bohrung
- 44: Druckknopf
- 46: Schlitten
- 48: Trägerelement
- 50: Schraube

## Patentansprüche

1. Batteriefachschloss (24) für ein Fahrzeug (10) mit
wenigstens einem Befestigungsmittel (36), durch welches das Batteriefachschloss (24) an jeweils einem dafür vorgesehenen Befestigungselement (34) des Fahrzeugs (10) befestigbar ist,
einem Riegel (26) zur Verriegelung einer in einem Batteriefach (22) des Fahrzeugs (10) aufgenommenen Batterie (16), und
einem mit dem Riegel (26) gekoppelten oder koppelbaren, manuell betätigbaren Betätigungselement (28, 44), durch welches der Riegel (26) aus einer die Batterie (16) verriegelnden Stellung in eine die Batterie (16) freigebende Stellung bewegbar ist,
wobei das Batteriefachschloss (24) wahlweise als ein elektronisches Batteriefachschloss (24) mit einer elektronisch lösbaren Sperrung des Riegels (26) in der Verriegelungsstellung oder als ein mechanisches Batteriefachschloss (24) mit einem durch einen physischen Schlüssel (30) zu betätigenden Schließzylinder (28) konfigurierbar ist und
wobei das Betätigungselement (28, 44) und das wenigstens eine Befestigungsmittel (36) in der elektronischen und mechanischen Konfiguration des Batteriefachschlosses (24) relativ zueinander gleich angeordnet sind.

2. Batteriefachschloss (24) nach Anspruch 1,
wobei das Betätigungselement (28, 44) im in das Fahrzeug (10) eingebauten Zustand des Batteriefachschlosses (24) durch eine in einem Rahmen (20) des Fahrzeugs (10) ausgebildete Öffnung (32) zugänglich ist.

3. Batteriefachschloss (24) nach Anspruch 1 oder 2,
wobei das Betätigungselement (28) bei mechanischer Konfiguration des Batteriefachschlosses (24) durch den Schließzylinder (28) gebildet ist.

4. Batteriefachschloss (24) nach Anspruch 1 oder 2,
wobei das Betätigungselement (44) bei elektronischer Konfiguration des Batteriefachschlosses (24) durch einen manuell betätigbaren Druckknopf (44) gebildet ist.

5. Batteriefachschloss (24) nach einem der vorherigen Ansprüche,
wobei der Riegel (26) und das Betätigungselement (28, 44) bei verriegelter Batterie (16) in der elektronischen und mechanischen Konfiguration des Batteriefachschlosses (24) relativ zueinander gleich angeordnet sind.

6. Batteriefachschloss (24) nach einem der Ansprüche 1 bis 4,
wobei der Riegel (26) und das Betätigungselement (28, 44) bei verriegelter Batterie (16) in der elektronischen und mechanischen Konfiguration des Batteriefachschlosses (24) relativ zueinander unterschiedlich angeordnet sind.

7. Batteriefachschloss (24) nach einem der vorherigen Ansprüche,
wobei das Betätigungselement (28, 44) eine Mittelachse (29) definiert und die Bewegungsrichtung des Riegels (26) zu der Mittelachse (29) des Betätigungselements (28, 44) rechtwinklig orientiert ist.

8. Batteriefachschloss (24) nach Anspruch 7,
wobei der Abstand eines der Batterie (16) zugewandten Endes des Riegels (26) zu der Mittelachse (29) des Betätigungselements (28, 44) bei verriegelter Batterie (16) eine Relativanordnung von Riegel (26) und Betätigungselement (28, 44) definiert.

9. Batteriefachschloss (24) nach einem der vorherigen Ansprüche,
wobei das Betätigungselement (28, 44) eine Mittelachse (29) definiert und der Riegel (26) in einer zu der Mittelachse (29) des Betätigungselements (28, 44) rechtwinklig orientierten Ebene bewegbar, insbesondere verschiebbar oder verschwenkbar, ist.

10. Batteriefachschloss (24) nach einem der vorherigen Ansprüche,
wobei das Betätigungselement (28, 44) eine Mittelachse (29) definiert und der Riegel (26) um eine zu der Mittelachse (29) des Betätigungselements (28, 44) parallelen Achse verschwenkbar ist.

11. Fahrzeug (10) mit einem Batteriefach (22) zur Aufnahme einer Batterie (16) und einem Batteriefachschloss (24) nach einem der vorherigen Ansprüche zur Verriegelung der in dem Batteriefachschloss (24) aufgenommenen Batterie (16).

12. Fahrzeug (10) nach Anspruch 11,
wobei das Batteriefach (22) in einem Rahmen (20) des Fahrzeugs (10) ausgebildet ist.

13. Fahrzeug (10) nach Anspruch 11 oder 12,
wobei das Batteriefach (22) zwei relativ zu dem Batteriefachschloss (24) unterschiedliche Aufnahmepositionen der Batterie (16) in dem Batteriefach (22) vorsieht.

14. Fahrzeug (10) nach Anspruch 13,
wobei die Aufnahmepositionen durch einen entlang einer Schiene auf das Batteriefachschloss (24) zu bzw. von dem Batteriefachschloss (24) weg bewegbaren Schlitten (46) zur Halterung der Batterie (16) in dem Batteriefach (22) definiert sind.
